(19) Europäisches Patentamt
European Patent Office
Office européen des brevets

(11) **EP 4 470 147 B1**

(12) **EUROPEAN PATENT SPECIFICATION**

(45) Date of publication and mention
of the grant of the patent:
**15.07.2026 Bulletin 2026/29**

(51) International Patent Classification (IPC):
*H04L 5/00* (2006.01)    *H04W 4/40* (2018.01)
*H04W 28/02* (2009.01)    *H04W 64/00* (2009.01)
*H04W 76/14* (2018.01)    *H04W 92/18* (2009.01)

(21) Application number: 23758399.2

(22) Date of filing: 08.08.2023

(52) Cooperative Patent Classification (CPC):
**H04L 5/0091; H04L 5/0051; H04W 28/0236;
H04W 28/0268; H04W 28/0289; H04W 28/0865;
H04W 28/0875;** H04W 64/00; H04W 92/18

(86) International application number:
**PCT/IB2023/057975**

(87) International publication number:
**WO 2024/033792 (15.02.2024 Gazette 2024/07)**

(54) **SIDELINK POSITIONING CONGESTION CONTROL**

ÜBERLASTUNGSSTEUERUNG ZUR SIDELINK-POSITIONIERUNG

RÉGULATION DE CONGESTION DE POSITIONNEMENT EN LIAISON LATÉRALE

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority:  08.08.2022  US 202263396070 P

(43) Date of publication of application:
**04.12.2024 Bulletin 2024/49**

(73) Proprietor: Lenovo (Singapore) Pte. Ltd.
**Singapore 556741 (SG)**

(72) Inventors:
• **GANESAN, Karthikeyan**
**61476 Kronberg Im Taunus (DE)**
• **THOMAS, Robin Rajan**
**60489 Frankfurt (DE)**
• **BEN HADJ FREDJ, Abir**
**65183 Wiesbaden (DE)**

(74) Representative: **Openshaw & Co.**
**8 Castle Street**
**Farnham, Surrey GU9 7HR (GB)**

(56) References cited:
**WO-A1-2022/059887    WO-A1-2022/155262
US-A1- 2023 337 171**

• **MCC SUPPORT: "Final Report of 3GPP TSG RAN
WG1 #98bis v1.0.0 (Chongqing, China, 14th -
20th October 2019)", vol. RAN WG1, no. Reno,
USA; 20191118 - 20191122, 15 November 2019
(2019-11-15), XP051825694, Retrieved from the
Internet <URL:https://ftp.3gpp.org/tsg_ran/
WG1_RL1/TSGR1_98b/Report/
Final_Minutes_report_RAN1%2398b_v100.zip
Final_Minutes_report_RAN1#98b_v100.docx>
[retrieved on 20191115]**

**Description**

RELATED APPLICATION

This application claims priority to U.S. Provisional Application Serial No. 63/396,070 filed August 08, 2022 entitled "Sidelink Positioning Congestion Control".

TECHNICAL FIELD

The present disclosure relates to wireless communications, and more specifically to sidelink positioning communications.

BACKGROUND

A wireless communications system may include one or multiple network communication devices, such as base stations, which may be otherwise known as an eNodeB (eNB), a next-generation NodeB (gNB), or other suitable terminology. Each network communication devices, such as a base station may support wireless communications for one or multiple user communication devices, which may be otherwise known as user equipment (UE), or other suitable terminology. The wireless communications system may support wireless communications with one or multiple user communication devices by utilizing resources of the wireless communications system, such as time resources (e.g., symbols, slots, subframes, frames, or the like) or frequency resources (e.g., subcarriers, carriers). Additionally, the wireless communications system may support wireless communications across various radio access technologies including third generation (3G) radio access technology, fourth generation (4G) radio access technology, fifth generation (5G) radio access technology, among other suitable radio access technologies beyond 5G (e.g., sixth generation (6G)).

Sidelink communication in a wireless communications system is utilized for device-to-device communication as a way to extend network coverage in areas that may be out of range and/or not directly covered by the system. For example, sidelink positioning control signaling can be communicated between two UEs without a signal relay through a base station. The sidelink communications between devices occurs over a set of physical channels on which a transport channel is utilized for control signaling, and includes a physical sidelink shared channel (PSSCH) that carries sidelink acknowledgement feedback from a receiving device to a transmitting device.

WO2022059887A1 discloses a method comprising the steps of: measuring a channel busy ratio (CBR) in a resource area preconfigured to perform positioning; transmitting a positioning packet including scheduling information for a positioning reference signal (PRS); and transmitting the PRS to neighboring terminals on the basis of the scheduling information, wherein the positioning packet includes a first threshold value related to the reliability of an absolute position for specifying a neighboring terminal which is to transmit a response PRS to the PRS, and the first threshold value is determined on the basis of the CBR.

WO2022155262A1 discloses a method performed by a first Wireless Transmit/Receive Unit (WTRU) which comprises requesting support from one or more potential assistant WTRUs (A-WTRUs); receiving a response message from one or more potential A-WTRUs, wherein the response message includes information indicating a coverage status within a network of the one or more potential A-WTRUs; determining, based on the received response messages, a set of A-WTRUs from the one or more potential A-WTRUs; determining, based on the coverage status of each one of the determined set of A-WTRUs, a synchronization source; and reporting, to the determined set of A-WTRUs, the determined synchronization source.

SUMMARY

The invention is defined by the appended independent claims.

The present disclosure relates to methods, apparatuses, and systems that support sidelink positioning congestion control. By utilizing the described techniques, sidelink transmission congestion control is extended to channel busy ratio (CBR) and channel occupancy ratio (CR) measurements from the transmission and reception of sidelink positioning reference signals (PRSs), and further specifies restrictions on sidelink transmit parameters for sidelink PRS transmission. Aspects of the present disclosure are directed to a congestion control mechanism for sidelink positioning, utilizing a lookup table that is (pre-)configured per positioning resource pool, sidelink bandwidth part (BWP), and/or sidelink positioning frequency layer, which restricts (i.e., provides upper bounds) on sidelink PRS transmit parameters. The lookup table includes a sidelink PRS transmit parameter list for each CBR range. By performing sidelink positioning congestion control, data traffic congestion by communication signaling between devices is managed, controlled, and reduced.

The invention is defined by the appended claims.

BRIEF DESCRIPTION OF THE DRAWINGS

FIG. 1 illustrates an example of a wireless communications system that supports sidelink positioning congestion control in accordance with aspects of the present disclosure.

FIG. 2 illustrates an example of mapping between PSSCH transmission parameter sets in an information element, along with associated field descriptions, which supports sidelink positioning congestion control in accordance with aspects of the present disclosure.

FIG. 3 illustrates an example of a list of PSSCH transmission parameters of a configuration list in an information element, along with associated field descriptions, which supports sidelink positioning congestion control in accordance with aspects of the present disclosure.

FIGs. 4 and 5 illustrate an example of a block diagram of devices that supports sidelink positioning congestion control in accordance with aspects of the present disclosure.

FIGs. 6 and 7 illustrate flowcharts of methods that support sidelink positioning congestion control in accordance with aspects of the present disclosure.

DETAILED DESCRIPTION

Sidelink communication in a wireless communications system is utilized for device-to-device communication as a way to extend network coverage in areas that may be out of range and/or not directly covered by the system. For example, sidelink positioning control signaling can be communicated between two UEs without a signal relay through a base station. The sidelink communications between devices occurs over a set of physical channels on which a transport channel is utilized for control signaling. Current congestion control mechanisms for sidelink data transmission and reception include using CBR and CR to determine a busy status of the sidelink carrier, and to define transmit parameter restrictions, such as modulation and coding scheme (MCS), a number of subchannels, a number of retransmissions, and a channel occupancy limit to mitigate congestion. Aspects of sidelink positioning congestion control need to be extended to include CBR and CR measurements from the transmission and reception of sidelink PRSs, and further specify restrictions on sidelink transmit parameters for sidelink PRS transmission. The extended sidelink positioning congestion control can also take into account sidelink positioning enhancements for vehicle to everything (V2X), commercial devices, and for the industrial Internet-of-things (IIoT).

In aspects of the present disclosure, sidelink transmission congestion control is extended to CBR and CR measurements from the transmission and reception of sidelink PRSs, and further specifies restrictions on sidelink transmit parameters for sidelink PRS transmission. Aspects of the present disclosure are directed to a congestion control mechanism for sidelink positioning, utilizing a lookup table that is (pre-)configured per positioning resource pool, sidelink BWP, and/or sidelink positioning frequency layer, which restricts (i.e., provides upper bounds) on sidelink PRS transmit parameters. The lookup table includes a sidelink PRS transmit parameter list for each CBR range. By performing sidelink positioning congestion control, data traffic congestion by communication signaling between devices is managed, controlled, and reduced.

In aspects of the disclosure directed to applying restrictions on sidelink transmission parameters for sidelink PRS transmission, a lookup table is (pre-)configured per positioning resource pool, sidelink BWP, and/or sidelink positioning frequency layer. This restricts (i.e., provides upper bounds) on sidelink PRS transmit parameters, such as PRS transmit power, a number of anchors, a number of repetition of PRS, a comb pattern, a number of subchannels and/or physical resource blocks (PRBs) of PRS, and an upper bound on the CR limit based on CBR range, per packet priority value, and cast type.

In aspects of the disclosure directed to applying restrictions on sidelink positioning schemes and/or techniques, a UE can be (pre-)configured to perform Uu-based positioning (not sidelink-based positioning) when both Uu-based positioning and sidelink-based positioning (i.e., joint positioning based on Uu and sidelink) is configured. In implementations, the sidelink-based positioning is not configured, or the transmit power of sidelink PRS is reduced to near zero. Alternatively or in addition, a UE can be (pre-)configured to switch to a RAT-independent positioning technique rather than a RAT-dependent positioning technique, or a subset of a RAT-dependent positioning technique, such as time difference of arrival (TDOA), multi-round-trip time (RTT) may not be configured according to the CBR values and CR limit.

Aspects of the present disclosure are described in the context of a wireless communications system. Aspects of the present disclosure are further illustrated and described with reference to device diagrams and flowcharts.

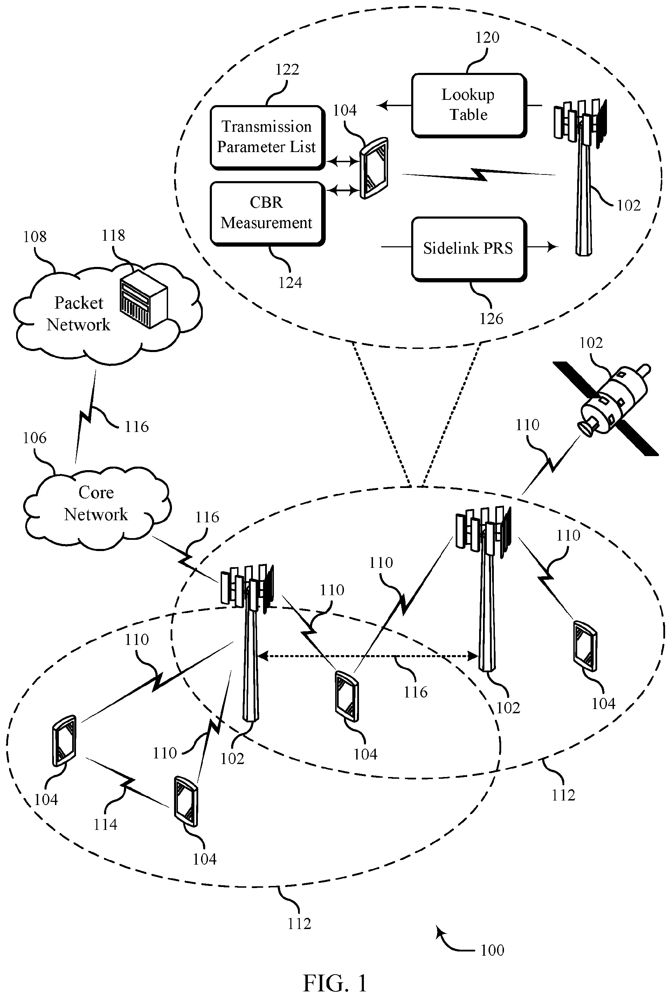

**FIG. 1** illustrates an example of a wireless communications system 100 that supports sidelink positioning congestion control in accordance with aspects of the present disclosure. The wireless communications system 100 may include one or more network entities 102, one or more UEs 104, a core network 106, and a packet data network 108. The wireless communications system 100 may support various radio access technologies. In some implementations, the wireless communications system 100 may be a 4G network, such as an LTE network or an LTE-Advanced (LTE-A) network. In some other implementations, the wireless communications system 100 may be a 5G network, such as an NR network. In other implementations, the wireless communications system 100 may be a combination of a 4G network and a 5G network, or other suitable radio access technology including Institute of Electrical and Electronics Engineers (IEEE) 802.11 (Wi-Fi), IEEE 802.16 (WiMAX), IEEE 802.20. The wireless communications system 100 may support radio access technologies beyond 5G. Additionally, the wireless communications system 100 may support technologies, such as time division multiple access (TDMA), frequency division multiple access (FDMA), or code division multiple access (CDMA), etc.

The one or more network entities 102 may be dispersed throughout a geographic region to form the wireless communications system 100. One or more of the network entities 102 described herein may be or include or may be referred to as a network node, a base station, a network element, a radio access network (RAN), a base transceiver station, an access point, a NodeB, an eNodeB (eNB), a next-generation NodeB (gNB), or other suitable terminology. A network entity 102 and a UE 104 may communicate via a communication link 110, which may be a wireless or wired connection. For example, a network entity 102 and a UE 104 may perform wireless communication (e.g., receive signaling, transmit signaling) over a Uu interface.

A network entity 102 may provide a geographic coverage area 112 for which the network entity 102 may support services (e.g., voice, video, packet data, messaging, broadcast, etc.) for one or more UEs 104 within the geographic coverage area 112. For example, a network entity 102 and a UE 104 may support wireless communication of signals related to services (e.g., voice, video, packet data, messaging, broadcast, etc.) according to one or multiple radio access technologies. In some implementations, a network entity 102 may be moveable, for example, a satellite associated with a non-terrestrial network. In some implementations, different geographic coverage areas 112 associated with the same or different radio access technologies may overlap, but the different geographic coverage areas 112 may be associated with different network entities 102. Information and signals described herein may be represented using any of a variety of different technologies and techniques. For example, data, instructions, commands, information, signals, bits, symbols, and chips that may be referenced throughout the description may be represented by voltages, currents, electromagnetic waves, magnetic fields or particles, optical fields or particles, or any combination thereof.

The one or more UEs 104 may be dispersed throughout a geographic region of the wireless communications system 100. A UE 104 may include or may be referred to as a mobile device, a wireless device, a remote device, a remote unit, a handheld device, or a subscriber device, or some other suitable terminology. In some implementations, the UE 104 may be referred to as a unit, a station, a terminal, or a client, among other examples. Additionally, or alternatively, the UE 104 may be referred to as an Internet-of-Things (IoT) device, an Internet-of-Everything (IoE) device, or machine-type communication (MTC) device, among other examples. In some implementations, a UE 104 may be stationary in the wireless communications system 100. In some other implementations, a UE 104 may be mobile in the wireless communications system 100.

The one or more UEs 104 may be devices in different forms or having different capabilities. Some examples of UEs 104 are illustrated in FIG. 1. A UE 104 may be capable of communicating with various types of devices, such as the network entities 102, other UEs 104, or network equipment (e.g., the core network 106, the packet data network 108, a relay device, an integrated access and backhaul (IAB) node, or another network equipment), as shown in FIG. 1. Additionally, or alternatively, a UE 104 may support communication with other network entities 102 or UEs 104, which may act as relays in the wireless communications system 100.

A UE 104 may also be able to support wireless communication directly with other UEs 104 over a communication link 114. For example, a UE 104 may support wireless communication directly with another UE 104 over a device-to-device (D2D) communication link. In some implementations, such as vehicle-to-vehicle (V2V) deployments, vehicle-to-everything (V2X) deployments, or cellular-V2X deployments, the communication link 114 may be referred to as a sidelink. For example, a UE 104 may support wireless communication directly with another UE 104 over a PC5 interface.

A network entity 102 may support communications with the core network 106, or with another network entity 102, or both. For example, a network entity 102 may interface with the core network 106 through one or more backhaul links 116 (e.g., via an S1, N2, or another network interface). The network entities 102 may communicate with each other over the backhaul links 116 (e.g., via an X2, Xn, or another network interface). In some implementations, the network entities 102 may communicate with each other directly (e.g., between the network entities 102). In some other implementations, the network entities 102 may communicate with each other or indirectly (e.g., via the core network 106). In some implementations, one or more network entities 102 may include subcomponents, such as an access network entity, which may be an example of an access node controller (ANC). An ANC may communicate with the one or more UEs 104 through one or more other access network transmission entities, which may be referred to as a radio heads, smart radio heads, or transmission-reception points (TRPs).

In some implementations, a network entity 102 may be configured in a disaggregated architecture, which may be configured to utilize a protocol stack physically or logically distributed among two or more network entities 102, such as an integrated access backhaul (IAB) network, an open RAN (O-RAN) (e.g., a network configuration sponsored by the O-RAN Alliance), or a virtualized RAN (vRAN) (e.g., a cloud RAN (C-RAN)). For example, a network entity 102 may include one or more of a central unit (CU), a distributed unit (DU), a radio unit (RU), a RAN Intelligent Controller (RIC) (e.g., a Near-Real Time RIC (Near-RT RIC), a Non-Real Time RIC (Non-RT RIC)), a Service Management and Orchestration (SMO) system, or any combination thereof.

An RU may also be referred to as a radio head, a smart radio head, a remote radio head (RRH), a remote radio unit (RRU), or a transmission reception point (TRP). One or more components of the network entities 102 in a disaggregated RAN architecture may be co-located, or one or more components of the network entities 102 may be located in distributed locations (e.g., separate physical locations). In some implementations, one or more network entities 102 of a disaggregated RAN architecture may be implemented as virtual units (e.g., a virtual CU (VCU), a virtual DU (VDU), a virtual RU (VRU)).

Split of functionality between a CU, a DU, and an RU may be flexible and may support different functionalities depending upon which functions (e.g., network layer functions, protocol layer functions, baseband functions, radio frequency functions, and any combinations thereof) are performed at a CU, a DU, or an RU. For example, a functional split of a protocol stack may be employed between a CU and a DU such that the CU may support one or more layers of the protocol stack and the DU may support one or more different layers of the protocol stack. In some implementations, the CU may host upper protocol layer (e.g., a layer 3 (L3), a layer 2 (L2)) functionality and signaling (e.g., Radio Resource Control (RRC), service data adaption protocol (SDAP), Packet Data Convergence Protocol (PDCP)). The CU may be connected to one or more DUs or RUs, and the one or more DUs or RUs may host lower protocol layers, such as a layer 1 (L1) (e.g., physical (PHY) layer) or an L2 (e.g., radio link control (RLC) layer, medium access control (MAC) layer) functionality and signaling, and may each be at least partially controlled by the CU.

Additionally, or alternatively, a functional split of the protocol stack may be employed between a DU and an RU such that the DU may support one or more layers of the protocol stack and the RU may support one or more different layers of the protocol stack. The DU may support one or multiple different cells (e.g., via one or more RUs). In some implementations, a functional split between a CU and a DU, or between a DU and an RU may be within a protocol layer (e.g., some functions for a protocol layer may be performed by one of a CU, a DU, or an RU, while other functions of the protocol layer are performed by a different one of the CU, the DU, or the RU).

A CU may be functionally split further into CU control plane (CU-CP) and CU user plane (CU-UP) functions. A CU may be connected to one or more DUs via a midhaul communication link (e.g., F1, F1-c, F1-u), and a DU may be connected to one or more RUs via a fronthaul communication link (e.g., open fronthaul (FH) interface). In some implementations, a midhaul communication link or a fronthaul communication link may be implemented in accordance with an interface (e.g., a channel) between layers of a protocol stack supported by respective network entities 102 that are in communication via such communication links.

The core network 106 may support user authentication, access authorization, tracking, connectivity, and other access, routing, or mobility functions. The core network 106 may be an evolved packet core (EPC), or a 5G core (5GC), which may include a control plane entity that manages access and mobility (e.g., a mobility management entity (MME), an access and mobility management functions (AMF)) and a user plane entity that routes packets or interconnects to external networks (e.g., a serving gateway (S-GW), a Packet Data Network (PDN) gateway (P-GW), or a user plane function (UPF)). In some implementations, the control plane entity may manage non-access stratum (NAS) functions, such as mobility, authentication, and bearer management (e.g., data bearers, signal bearers, etc.) for the one or more UEs 104 served by the one or more network entities 102 associated with the core network 106.

The core network 106 may communicate with the packet data network 108 over one or more backhaul links 116 (e.g., via an S1, N2, or another network interface). The packet data network 108 may include an application server 118. In some implementations, one or more UEs 104 may communicate with the application server 118. A UE 104 may establish a session (e.g., a protocol data unit (PDU) session, or the like) with the core network 106 via a network entity 102. The core network 106 may route traffic (e.g., control information, data, and the like) between the UE 104 and the application server 118 using the established session (e.g., the established PDU session). The PDU session may be an example of a logical connection between the UE 104 and the core network 106 (e.g., one or more network functions of the core network 106).

In the wireless communications system 100, the network entities 102 and the UEs 104 may use resources of the wireless communications system 100, such as time resources (e.g., symbols, slots, subframes, frames, or the like) or frequency resources (e.g., subcarriers, carriers) to perform various operations (e.g., wireless communications). In some implementations, the network entities 102 and the UEs 104 may support different resource structures. For example, the network entities 102 and the UEs 104 may support different frame structures. In some implementations, such as in 4G, the network entities 102 and the UEs 104 may support a single frame structure. In some other implementations, such as in 5G and among other suitable radio access technologies, the network entities 102 and the UEs 104 may support various frame structures (i.e., multiple frame structures). The network entities 102 and the UEs 104 may support various frame structures based on one or more numerologies.

One or more numerologies may be supported in the wireless communications system 100, and a numerology may include a subcarrier spacing and a cyclic prefix. A first numerology (e.g., $\mu$=0) may be associated with a first subcarrier spacing (e.g., 15 kHz) and a normal cyclic prefix. The first numerology (e.g., $\mu$=0) associated with the first subcarrier spacing (e.g., 15 kHz) may utilize one slot per subframe. A second numerology (e.g., $\mu$=1) may be associated with a second subcarrier spacing (e.g., 30 kHz) and a normal cyclic prefix. A third numerology (e.g., $\mu$=2) may be associated with a third subcarrier spacing (e.g., 60 kHz) and a normal cyclic prefix or an extended cyclic prefix. A fourth numerology (e.g., $\mu$=3) may be associated with a fourth subcarrier spacing (e.g., 120 kHz) and a normal cyclic prefix. A fifth numerology (e.g., $\mu$=4) may be associated with a fifth subcarrier spacing (e.g., 240 kHz) and a normal cyclic prefix.

A time interval of a resource (e.g., a communication resource) may be organized according to frames (also referred to as radio frames). Each frame may have a duration, for example, a 10 millisecond (ms) duration. In some implementations, each frame may include multiple subframes. For example, each frame may include 10 subframes, and each subframe may have a duration, for example, a 1 ms duration. In some implementations, each frame may have the same duration. In some implementations, each subframe of a frame may have the same duration.

Additionally or alternatively, a time interval of a resource (e.g., a communication resource) may be organized according to slots. For example, a subframe may include a number (e.g., quantity) of slots. Each slot may include a number (e.g., quantity) of symbols (e.g., orthogonal frequency division multiplexing (OFDM) symbols). In some implementations, the number (e.g., quantity) of slots for a subframe may depend on a numerology. For a normal cyclic prefix, a slot may include 14 symbols. For an extended cyclic prefix (e.g., applicable for 60 kHz subcarrier spacing), a slot may include 12 symbols. The relationship between the number of symbols per slot, the number of slots per subframe, and the number of slots per frame for a normal cyclic prefix and an extended cyclic prefix may depend on a numerology. It should be understood that reference to a first numerology (e.g., $\mu$=0) associated with a first subcarrier spacing (e.g., 15 kHz) may be used interchangeably between subframes and slots.

In the wireless communications system 100, an electromagnetic (EM) spectrum may be split, based on frequency or wavelength, into various classes, frequency bands, frequency channels, etc. By way of example, the wireless communications system 100 may support one or multiple operating frequency bands, such as frequency range designations FR1 (410 MHz - 7.125 GHz), FR2 (24.25 GHz - 52.6 GHz), FR3 (7.125 GHz - 24.25 GHz), FR4 (52.6 GHz - 114.25 GHz), FR4a or FR4-1 (52.6 GHz - 71 GHz), and FR5 (114.25 GHz - 300 GHz). In some implementations, the network entities 102 and the UEs 104 may perform wireless communications over one or more of the operating frequency bands. In some implementations, FR1 may be used by the network entities 102 and the UEs 104, among other equipment or devices for cellular communications traffic (e.g., control information, data). In some implementations, FR2 may be used by the network entities 102 and the UEs 104, among other equipment or devices for short-range, high data rate capabilities.

FR1 may be associated with one or multiple numerologies (e.g., at least three numerologies). For example, FR1 may be associated with a first numerology (e.g., $\mu$=0), which includes 15 kHz subcarrier spacing; a second numerology (e.g., $\mu$=1), which includes 30 kHz subcarrier spacing; and a third numerology (e.g., $\mu$=2), which includes 60 kHz subcarrier spacing. FR2 may be associated with one or multiple numerologies (e.g., at least 2 numerologies). For example, FR2 may be associated with a third numerology (e.g., $\mu$=2), which includes 60 kHz subcarrier spacing; and a fourth numerology (e.g., $\mu$=3), which includes 120 kHz subcarrier spacing.

According to implementations, one or more of the network entities 102 and the UEs 104 are operable to implement various aspects of sidelink positioning congestion control, as described herein. For instance, a network entity 102 (e.g., a base station) configures a lookup table 120 that includes associations of one or more sidelink positioning transmission parameters, a CBR range of values, and a packet priority, and the network entity 102 transmits the lookup table 120 to a UE 104 indicating a control configuration of transmission parameters for a sidelink PRS. The UE 104 receives the lookup table 120 from the network entity 102, and configures a transmission parameter list 122 for transmission of the sidelink PRS based on a CBR measurement 124. The UE 104 transmits the sidelink PRS 126 based on a transmission parameter of the transmission parameter list 122 and the CBR measurement 124.

In aspects of sidelink positioning congestion control, there are no current techniques for congestion control for PRS (or any RS). The supported positioning techniques (release 16) are listed below in Table T1, and separate positioning techniques can be configured and performed based on requirements of the location management function (LMF) and UE capabilities. The transmission of PRSs enable the UE to perform UE positioning-related measurements to enable the computation of a UE's location estimate and are configured per transmission reception point (TRP), where a TRP may transmit one or more beams.

Table T1: Supported Rel-16 UE Positioning Methods

| Method | UE-based | UE-assisted, LMF-based | NG-RAN node assisted | SUPL |
|---|---|---|---|---|
| A-GNSS | Yes | Yes | No | Yes (UE-based and UE-assisted) |
| OTDOA [Notes1,2] | No | Yes | No | Yes (UE-assisted) |
| E-CID Note 4 | No | Yes | Yes | Yes for E-UTRA (UE-assisted) |
| Sensor | Yes | Yes | No | No |
| WLAN | Yes | Yes | No | Yes |
| Bluetooth | No | Yes | No | No |
| TBS [Note 5] | Yes | Yes | No | Yes (MBS) |
| DL-TDOA | Yes | Yes | No | No |
| DL-AoD | Yes | Yes | No | No |
| Multi-RTT | No | Yes | Yes | No |
| NR E-CID | No | Yes | FFS | No |
| UL-TDOA | No | No | Yes | No |
| UL-AoA | No | No | Yes | No |
| NOTE 1: This includes TBS positioning based on PRS signals.<br>NOTE 2: In this version of the specification only OTDOA based on LTE signals is supported.<br>NOTE 3: Void.<br>NOTE 4: This includes Cell-ID for NR method.<br>NOTE 5: In this version of the specification only for TBS positioning based on MBS signals.<br>NOTE 6: Void | | | | |

Various RAT-dependent positioning techniques (also referred to as positioning methods, or positioning procedures) are supported for a UE, for UE-assisted, LMF-based, and/or for NG-RAN node assisted. The RAT-dependent positioning techniques that are supported include downlink-time difference of arrival (DL-TDOA), downlink-angle of departure (DL-AoD), multi-round trip time (multi-RTT), new radio enhanced cell-ID (NR E-CID); uplink-time difference of arrival (UL-TDOA); and uplink-angle of arrival (UL-AoA). With reference to the RAT-dependent positioning techniques, the DL-TDOA positioning technique utilizes at least three network nodes for positioning based on triangulation. The DL-TDOA positioning method makes use of the downlink reference signal time difference (RSTD) (and optionally downlink PRS reference signal received power (RSRP) (DL PRS RSRP)) of downlink signals received from multiple transmission points (TPs) at the UE. The UE measures the downlink RSTD (and optionally DL PRS RSRP) of the received signals using assistance data received from the positioning server (also referred to herein as the location server), and the resulting measurements are used along with other configuration information to locate the UE in relation to the neighboring TPs.

The DL-AoD positioning technique makes use of the measured DL PRS RSRP of downlink signals received from multiple TPs at the UE. The UE measures the DL PRS RSRP of the received signals using assistance data received from the positioning server (also referred to herein as the location server), and the resulting measurements are used along with other configuration information to locate the UE in relation to the neighboring TPs.

The multi-RTT positioning technique makes use of the UE receive (Rx)-transmit (Tx) measurements and DL PRS RSRP of downlink signals received from multiple transmission-reception points (TRPs), as measured by the UE and the measured gNB Rx-Tx measurements and uplink sounding reference signal (SRS) RSRP (UL SRS-RSRP) at multiple TRPs of uplink signals transmitted from UE. The UE measures the UE Rx-Tx measurements (and optionally DL PRS RSRP of the received signals) using assistance data received from the positioning server (also referred to herein as the location server), and the TRPs the gNB Rx-Tx measurements (and optionally UL SRS-RSRP of the received signals) using assistance data received from the positioning server. The measurements are used to determine the RTT at the positioning server, which are used to estimate the location of the UE.

For the NR enhanced cell ID (E-CID) positioning technique, the position of a UE is estimated with the knowledge of its serving ng-eNB, gNB, and cell, and is based on LTE signals. The information about the serving ng-eNB, gNB, and cell may be obtained by paging, registration, or other methods. The NR enhanced cell-ID (NR E-CID) positioning refers to techniques which use additional UE measurements and/or NR radio resources and other measurements to improve the UE location estimate using NR signals. Although enhanced cell-ID (E-CID) positioning may utilize some of the same measurements as the measurement control system in the radio resource control (RRC) protocol, the UE may not make additional measurements for the sole purpose of positioning (i.e., the positioning procedures do not supply a measurement configuration or measurement control message, and the UE reports the measurements that it has available rather than being required to take additional measurement actions).

The uplink time difference of arrival (UL-TDOA) positioning technique makes use of the UL-TDOA (and optionally UL SRS-RSRP) at multiple reception points (RPs) of uplink signals transmitted from UE. The RPs measure the UL-TDOA (and optionally UL SRS-RSRP) of the received signals using assistance data received from the positioning server, and the resulting measurements are used along with other configuration information to estimate the location of the UE. The uplink angle of arrival (UL-AoA) positioning technique makes use of the measured azimuth and the zenith of arrival at multiple RPs of uplink signals transmitted from UE. The RPs measure azimuth-AoA and zenith-AoA of the received signals using assistance data received from the positioning server (also referred to herein as the location server), and the resulting measurements are used along with other configuration information to estimate the location of the UE.

With reference to sidelink congestion control in sidelink resource allocation mode 2, if a UE is configured with higher layer parameter *sl-CR-Limit* and transmits PSSCH in slot *n,* then the UE shall ensure the following limits for any priority value k:

$$\sum_{i \geq k} CR(i) \leq CR_{Limit}(k)$$

where *CR*(*i*) is the CR evaluated in slot *n-N* for the PSSCH transmissions with 'Priority' field in the SCI set to *i,* and *CR$_{Limit}$*(*k*) corresponds to the high layer parameter *sl-CR-Limit* that is associated with the priority value *k* and the CBR range which includes the CBR measured in slot *n-N,* where *N* is the congestion control processing time. The congestion control processing time *N* is based on $\mu$ of Table 2 below (i.e., Table 8.1.6-1) and Table 3 below (i.e., Table 8.1.6-2) for UE processing capability 1 and 2 respectively, where $\mu$ corresponds to the subcarrier spacing of the sidelink channel with which the PSSCH is to be transmitted. A UE shall only apply a single processing time capability in sidelink congestion control, and it is up to UE implementation as how to meet the limits, including dropping the transmissions in slot *n.*

Table T2: Congestion control processing time for processing timing capability 1

| $\mu$ | Congestion control processing time N [slots] |
|---|---|
| 0 | 2 |
| 1 | 2 |
| 2 | 4 |
| 3 | 8 |

Table T3: Congestion control processing time for processing timing capability 2

| $\mu$ | Congestion control processing time N [slots] |
|---|---|
| 0 | 2 |
| 1 | 4 |
| 2 | 8 |
| 3 | 16 |

In aspects of this disclosure, sidelink (release 16) agreements on congestion control are taken into consideration. Per the agreements: LTE V2X sidelink congestion control is the starting point for defining NR sidelink congestion control. Higher-layer reporting of CBR to the gNB is supported for RRC connected UEs.

The agreements include for a high congestion scenario, a UE dropping option A with a vehicle speed of 10 km/h for highway is taken as an additional simulation assumption, where 100% of vehicles generate packets, and companies can select the traffic model(s) from two models that include periodic traffic model 1 (low traffic intensity) and aperiodic traffic model 1 (medium traffic intensity) (as in TR 37.885). A company provides details of congestion control operation if it is modeled. The agreements include to define NR sidelink CR measurement, with LTE CR as the baselines.

The agreements also include that congestion control can restrict the values of at least the following PSSCH and/or physical sidelink control channel (PSCCH) transmit parameters per resource pool: the range of MCS for a given MCS table supported within the resource pool; the range of number of sub-channels; an upper bound of a number of (re)transmissions (already agreed in mode 2 AI); and an upper bound of transmit power (including zero transmit power). Congestion control can set an upper bound on CR, $CR_{limit}$. Ranges and bounds of the transmission parameters and $CR_{limit}$ are functions of quality of service (QoS) and CBR. In addition to congestion control (in use or not in use), the above parameters can be restricted by reusing the same mechanism as in LTE for speed, further discussion on absolute vs. relative speed; for FFS other parameter(s) that can be restricted; and for FFS whether or not to tie the speed with a UE capability.

The agreements include lookup table links CBR range with values of the transmission parameters and $CR_{limit}$ for each value of the indication of a priority of a sidelink transmission carried by SCI payload (as per WA from RAN1#98), and the lookup table is (pre-)configured (details up to RAN2) up to 16 (as a working assumption) CBR ranges are supported and the working assumption will be automatically confirmed in RAN1#99 if no further input. For the priority indication in the 1st stage SCI: up to RAN2 on how to define the mapping between the priority indication and the corresponding QoS; and the size is 3 bits (as a working assumption).

The agreements include that sidelink RSSI (SL-RSSI) measurement is used for CBR estimation. A sidelink resource is busy for the purpose of CBR measurement if the sidelink RSSI measured by the UE in that resource exceeds a (pre-)configured threshold. The CBR measurement time window size is 100 ms and 100 slots by (pre-)configuration. The CR window size is { 1000 ms, 1000 slots } by (pre-)configuration. Only transmit parameter restriction based on absolute speed can be (pre-)configured in Rel-16.

The agreements include that the future segment of the CR evaluation window reuses the same behavior as in the LTE V2X sidelink, and FFS whether additional constraints on a UE choice of values for a and b are needed. For the constraints on past and/or future window in CR evaluation: $n+b$ shall not exceed the last transmission opportunity of the grant for the current transmission; where $b >= 0$; and ($b$ is in slots) $b < (a+b+1)/2$. Note that LTEs "should" has been replaced by "shall".

The agreements also include that, in addition to congestion control (in use or not in use), the following PSSCH and PSCCH transmit parameters per resource pool can be restricted by reusing the same mechanism as in LTE: the range of MCS for a given MCS table supported within the resource pool; the range of number of sub-channels; and an upper bound of number of (re)transmissions.

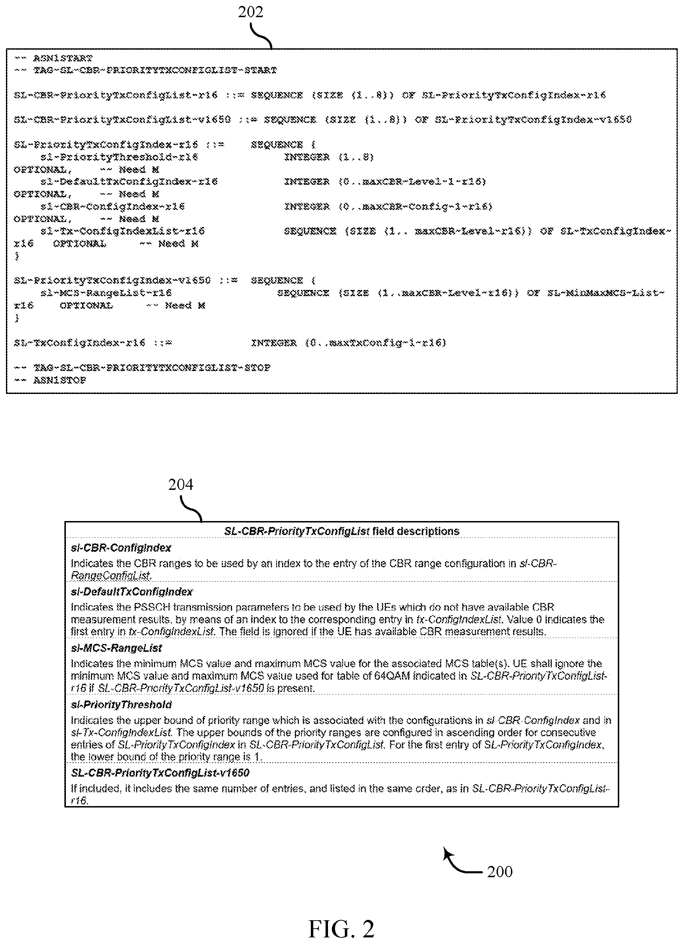

**FIG. 2** illustrates an example 200 of mapping between PSSCH transmission parameter sets in an information element 202, along with associated field descriptions 204, which supports sidelink positioning congestion control in accordance with aspects of the present disclosure. The information element (IE) *SL-CBR-PriorityTxConfigList* indicates the mapping between PSSCH transmission parameter (such as MCS, PRB number, retransmission number, CR limit) sets by using the indexes of the configurations provided in *sl-CBR-PSSCH-TxConfigList,* CBR ranges by an index to the entry of the CBR range configuration in *sl-CBR-RangeConfigList,* and priority ranges. It also indicates the default PSSCH transmission parameters to be used when CBR measurement results are not available, and MCS range for the MCS tables used in the resource pool.

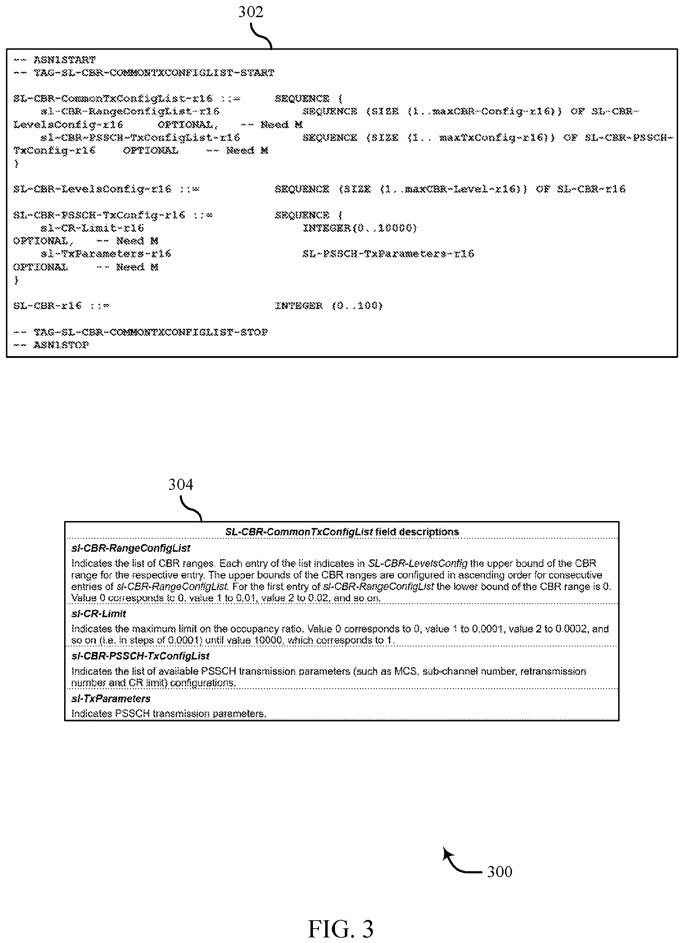

**FIG. 3** illustrates an example 300 of a list of PSSCH transmission parameters of a configuration list in an information element 302, along with associated field descriptions 304, which supports sidelink positioning congestion control in accordance with aspects of the present disclosure. The IE *SL-CBR-CommonTxConfigList* indicates the list of PSSCH transmission parameters (such as MCS, sub-channel number, retransmission number, CR limit) in *sl-CBR-PSSCH-TxConfigList,* and the list of CBR ranges in *sl-CBR-RangeConfigList,* to configure congestion control to the UE for sidelink communication.

In this described disclosure, the terms eNB and gNB are also used for the base station, but are replaceable by any other radio access node (e.g., base station (BS), eNB, gNB, access point (AP), NR, etc.). Further the disclosure is described mainly in the context of 5G NR. However, the proposed solutions and described techniques are equally applicable to other mobile communication systems supporting serving cells and carriers configured for sidelink communication over a PC5 interface. The CBR provides an overall view on channel congestion by measuring the subchannels over the window size of the last 100 ms or 100 slots, whichever is (pre-)configured, and a sidelink resource is busy for the purpose of CBR measurement if the sidelink RSSI measured by the UE in that resource exceeds a (pre-)configured threshold. Although the word 'restricted' or limit is used throughout the specification, it also means that the corresponding preparation and/or transmission of a report for a particular scheme(s) may also be dropped by a UE or provide an upper bound of value to be used.

Aspects of sidelink positioning congestion control include restriction applied on sidelink transmit parameter for sidelink PRS transmission. In one or more implementations, a lookup table can be (pre-)configured per positioning resource pool, sidelink BWP, and/or sidelink positioning frequency layer, which restricts (i.e., provides upper bounds) for a sidelink PRS transmit parameters list, such as PRS transmit power, a number of anchors, a number of repetition of PRS, a comb pattern, a number of subchannels or PRBs of PRS, PRS sub-bands, etc., and an upper bound on the CR ratio limit based on CBR range, per packet priority value, and cast type. The lookup table can be generated to include a SL PRS transmit parameter list for each CBR range, per packet priority value of the positioning service (i.e., QoS value), and/or a range of per packet priority value of the positioning service.

In an implementation, a UE can apply the comb pattern that is (pre-)configured in the lookup table according to CBR and priority values, given that the comb pattern determines the number of SL PRS resources in a PRB or subchannel, thereby affecting the CR (i.e., upper bound). In an example, the comb-12 can applied to low priority data traffic (i.e., a high QoS value correlates to a low priority) and comb-6 can be applied for high priority data traffic, etc. In another example, the comb-12 can be utilized for a congested scenario because the PRS resource may not be dense compared to comb-4 or comb-2, whereas the PRS resource maybe dense.

In another implementation, the number of anchor nodes transmitting SL PRS for a TDoA positioning technique can be restricted according to the CBR and priority values. Given that the anchor nodes are transmitting SL PRS towards the target UE, then limiting the number of anchor nodes thereby limits the number of transmitters transmitting the sidelink PRS, thus reducing the data traffic congestion and channel occupancy ratio. In another implementation, if the UE is configured with the PRS coherent combining by combining multiple PRS sub-bands hopped in a different frequency resource, then according to the congestion control mechanism, the number of sub-bands, a number of frequency hops, a frequency hopping pattern, and/or a coherent bandwidth of PRS are restricted according to the CBR and priority values. In an implementation, a separate CBR and CR window size in terms of the number of slots or milli-seconds can be (pre-)configured to measure RSSI and/or RSRP values from the transmission of SL PRS in a resource pool.

Aspects of sidelink positioning congestion control also includes restriction applied on sidelink positioning schemes and techniques, where a UE is (pre-)configured to restrict, such as to apply only Uu-based positioning (not sidelink-based positioning) when both Uu-based positioning and sidelink-based positioning (i.e., joint positioning based on Uu and SL) is configured. The sidelink-based positioning is not configured, or the transmit power of SL PRS is reduced to near zero. A UE can be (pre-)configured to switch to a RAT-independent positioning technique rather than a RAT-dependent positioning technique. A UE can be (pre-)configured to switch to a subset of a RAT-dependent positioning technique, such as TDoA may be restricted, which means that the techniques utilizing multiple anchor nodes transmitting SL PRS are restricted due to increases in the potential number of transmitters, and techniques using single or a limited number of anchor nodes can be implemented according to the CBR values and CR limit when sidelink RSSI/RSRP measured by the UE in the positioning resource pool, SL BWP, PFL exceeds a (pre-)configured threshold.

An example of a lookup table is shown below in Table 4, which associates a sidelink positioning transmit parameter, techniques per CBR value and/or range, and packet priority. The smaller priority value implies a high priority QoS, and higher the CBR value, the more congested is the channel.

Table T4: Restriction of transmit parameter for SL PRS and schemes based on CBR and per packet priority.

| CBR | Priority 1-2 (high priority) | Priority 3-5 (medium priority) | Priority 6-8 (low priority) |
|---|---|---|---|
| 0 < CBR < 0.3 | No limit | No limit | No limit |
| 0.3 < CBR < 0.65 | No limit | No limit | Apply restriction to SL PRS comb pattern |
| 0.65 < CBR < 0.8 | No limit | Apply restriction to SL PRS comb pattern | Apply restriction to SL PRS comb pattern<br><br>Apply SL PRS Tx power control<br><br>Apply restriction on the number of SL PRS resource (subchannel/PRBs)<br><br>Apply restriction on the number of repetitions |
| 0.8 < CBR< 1 | Apply restriction to SL PRS comb pattern<br><br>Apply SL PRS Tx power control<br><br>Apply restriction on the number of SL PRS resource (subchannel/PRBs) | Apply restriction to SL PRS comb pattern<br><br>Apply SL PRS Tx power control<br><br>Apply restriction on the number of SL PRS resource (subchannel/PRBs) | Switch to RAT independent positioning technique<br><br>Apply restriction such as Subset of RAT dependent positioning technique such as TDoA, multi-RTT may not be configured<br><br>Switch only to Uu based positioning and not based on sidelink based |

(continued)

| CBR | Priority 1-2 (high priority) | Priority 3-5 (medium priority) | Priority 6-8 (low priority) |
|---|---|---|---|
| | Apply restriction on the number of repetitions | Apply restriction on the number of repetitions Apply restriction such as Subset of RAT dependent positioning technique such as TDoA, multi-RTT may not be configured | positioning (when both Uu based positioning and sidelink based positioning i.e., joint positioning based on Uu and SL is configured) |

Aspects of the present disclosure include a CBR measurement window and combined transmit parameter list for sidelink data and sidelink PRS. In one or more implementations, a UE can be (pre-)configured with a separate CBR measurement window, one for performing CBR measurement for sidelink PRS and another measurement window for performing sidelink data and control channel transmission (i.e., PSCCH/PSSCH/PSFCH) which may further depend on the configuration of a separate resource pool for sidelink data and sidelink PRS, or a common or combined resource pool for sidelink data and sidelink PRS and TDM of those resource pools in slots used for the CBR window.

In an implementation, a sidelink PRS can be (pre)configured in a resource pool with dedicated symbols in a certain sidelink slot, otherwise the TDM of resource pool for PRS and sidelink data configuration affecting the CBR window is a combined CBR measurement window, which can be applied to measure RSSI on subchannels or PRBs considering both sidelink PRS and sidelink data. A subset of combined transmit parameter restriction can be applied for both sidelink data and sidelink PRS according to CBR and priority value, such as transmit power, a number of subchannels or PRBs, a CR limit, a number of repetitions, etc.

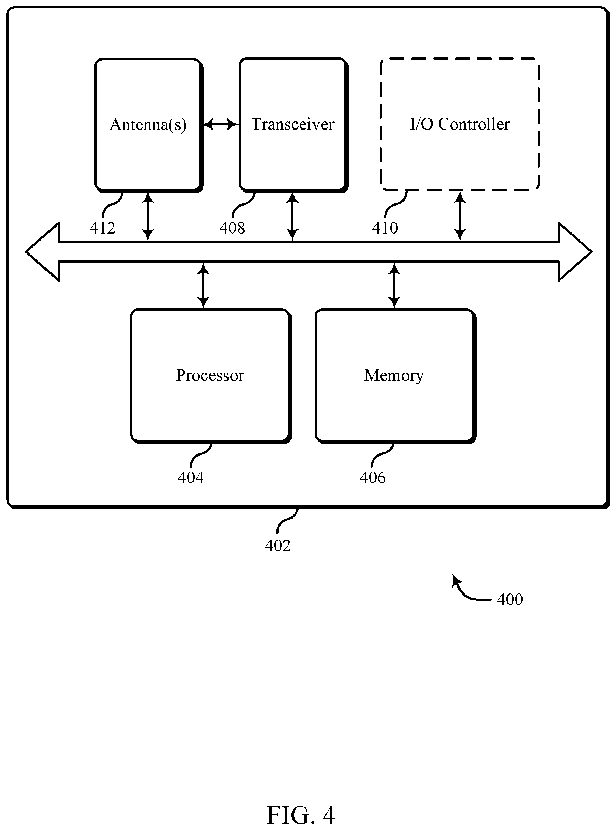

**FIG. 4** illustrates an example of a block diagram 400 of a device 402 that supports sidelink positioning congestion control in accordance with aspects of the present disclosure. The device 402 may be an example of a UE 104 as described herein. The device 402 may support wireless communication with one or more network entities 102, UEs 104, or any combination thereof. The device 402 may include components for bi-directional communications including components for transmitting and receiving communications, such as a processor 404, a memory 406, a transceiver 408, and an I/O controller 410. These components may be in electronic communication or otherwise coupled (e.g., operatively, communicatively, functionally, electronically, electrically) via one or more interfaces (e.g., buses).

The processor 404, the memory 406, the transceiver 408, or various combinations thereof or various components thereof may be examples of means for performing various aspects of the present disclosure as described herein. For example, the processor 404, the memory 406, the transceiver 408, or various combinations or components thereof may support a method for performing one or more of the operations described herein.

In some implementations, the processor 404, the memory 406, the transceiver 408, or various combinations or components thereof may be implemented in hardware (e.g., in communications management circuitry). The hardware may include a processor, a digital signal processor (DSP), an application-specific integrated circuit (ASIC), a field-programmable gate array (FPGA) or other programmable logic device, a discrete gate or transistor logic, discrete hardware components, or any combination thereof configured as or otherwise supporting a means for performing the functions described in the present disclosure. In some implementations, the processor 404 and the memory 406 coupled with the processor 404 may be configured to perform one or more of the functions described herein (e.g., executing, by the processor 404, instructions stored in the memory 406).

For example, the processor 404 may support wireless communication at the device 402 in accordance with examples as disclosed herein. The processor 404 may be configured as or otherwise support a means for receiving a signaling indicating a control configuration of transmission parameters for a sidelink PRS; configuring a transmission parameter list for transmission of the sidelink PRS based at least in part on a CBR measurement; and transmitting the sidelink PRS based at least in part on a transmission parameter of the transmission parameter list and the CBR measurement.

Additionally, the processor 404 may be configured as or otherwise support any one or combination of the sidelink PRS is transmitted based at least in part on a priority of sidelink transmission. The CBR measurement is based at least in part on a sidelink RSSI. The control configuration of the transmission parameters is received as a lookup table comprising associations of one or more sidelink positioning transmission parameters, a CBR range of values, and a packet priority. The transmission parameter list includes the transmission parameters including upper bounds on one or more of a transmission power, a number of anchor nodes, a number of repetitions, a comb pattern, a quantity of subchannels, a quantity of PRSs, or a channel occupancy ratio. The control configuration of the transmission parameters is received as one or more sidelink positioning techniques according to at least one of the CBR measurement or a priority of sidelink transmission. The control configuration of the transmission parameters is received as a sidelink RAT independent positioning technique according to at least one of the CBR measurement or a priority of sidelink transmission. The control configuration of the transmission parameters is received as a subset of the transmission parameters that forms a combined restriction of sidelink data and sidelink PRS. The combined restriction of the sidelink data and the sidelink PRS is based on at least one of the CBR measurement, a priority value of sidelink transmission power, a quantity of subchannels, a quantity of PRSs, a channel occupancy ratio limit, or a quantity of repetitions.

Additionally, or alternatively, the device 402, in accordance with examples as disclosed herein, may include an apparatus for wireless communication, comprising a processor; and a memory coupled with the processor, the processor configured to receive a signaling indicating a control configuration of transmission parameters for a sidelink PRS; configure a transmission parameter list for transmission of the sidelink PRS based at least in part on a CBR measurement; and transmit the sidelink PRS based at least in part on a transmission parameter of the transmission parameter list and the CBR measurement.

Additionally, the wireless communication at the device 402 may include any one or combination of the processor is configured to transmit the sidelink PRS based at least in part on a priority of sidelink transmission. The CBR measurement is based at least in part on a sidelink RSSI. The processor is configured to receive the control configuration of the transmission parameters as a lookup table comprising associations of one or more sidelink positioning transmission parameters, a CBR range of values, and a packet priority. The transmission parameter list includes the transmission parameters including upper bounds on one or more of a transmission power, a number of anchor nodes, a number of repetitions, a comb pattern, a quantity of subchannels, a quantity of PRSs, or a channel occupancy ratio. The processor is configured to receive the control configuration of the transmission parameters as one or more sidelink positioning techniques according to at least one of the CBR measurement or a priority of sidelink transmission. The processor is configured to receive the control configuration of the transmission parameters as a sidelink RAT-independent positioning technique according to at least one of the CBR measurement or a priority of sidelink transmission. The processor is configured to receive the control configuration as a subset of the transmission parameters that forms a combined restriction of sidelink data and sidelink PRS. The combined restriction of the sidelink data and the sidelink PRS is based on at least one of the CBR measurement, a priority value of sidelink transmission power, a quantity of subchannels, a quantity of PRSs, a channel occupancy ratio limit, or a quantity of repetitions.

The processor 404 of the device 402, such as a UE 104, may support wireless communication in accordance with examples as disclosed herein. The processor 404 includes at least one controller coupled with at least one memory, and is configured to or operable to cause the processor to receive a signaling indicating a control configuration of transmission parameters for a sidelink PRS; configure a transmission parameter list for transmission of the sidelink PRS based at least in part on a CBR measurement; and transmit the sidelink PRS based at least in part on a transmission parameter of the transmission parameter list and the CBR measurement.

The processor 404 may include an intelligent hardware device (e.g., a general-purpose processor, a DSP, a CPU, a microcontroller, an ASIC, an FPGA, a programmable logic device, a discrete gate or transistor logic component, a discrete hardware component, or any combination thereof). In some implementations, the processor 404 may be configured to operate a memory array using a memory controller. In some other implementations, a memory controller may be integrated into the processor 404. The processor 404 may be configured to execute computer-readable instructions stored in a memory (e.g., the memory 406) to cause the device 402 to perform various functions of the present disclosure.

The memory 406 may include random access memory (RAM) and read-only memory (ROM). The memory 406 may store computer-readable, computer-executable code including instructions that, when executed by the processor 404 cause the device 402 to perform various functions described herein. The code may be stored in a non-transitory computer-readable medium such as system memory or another type of memory. In some implementations, the code may not be directly executable by the processor 404 but may cause a computer (e.g., when compiled and executed) to perform functions described herein. In some implementations, the memory 406 may include, among other things, a basic I/O system (BIOS) which may control basic hardware or software operation such as the interaction with peripheral components or devices.

The I/O controller 410 may manage input and output signals for the device 402. The I/O controller 410 may also manage peripherals not integrated into the device M02. In some implementations, the I/O controller 410 may represent a physical connection or port to an external peripheral. In some implementations, the I/O controller 410 may utilize an operating system such as iOS®, ANDROID®, MS-DOS®, MS-WINDOWS®, OS/2®, UNIX®, LINUX®, or another known operating system. In some implementations, the I/O controller 410 may be implemented as part of a processor, such as the processor 404. In some implementations, a user may interact with the device 402 via the I/O controller 410 or via hardware components controlled by the I/O controller 410.

In some implementations, the device 402 may include a single antenna 412. However, in some other implementations, the device 402 may have more than one antenna 412 (i.e., multiple antennas), including multiple antenna panels or antenna arrays, which may be capable of concurrently transmitting or receiving multiple wireless transmissions. The transceiver 408 may communicate bi-directionally, via the one or more antennas 412, wired, or wireless links as described herein. For example, the transceiver 408 may represent a wireless transceiver and may communicate bi-directionally with another wireless transceiver. The transceiver 408 may also include a modem to modulate the packets, to provide the modulated packets to one or more antennas 412 for transmission, and to demodulate packets received from the one or more antennas 412.

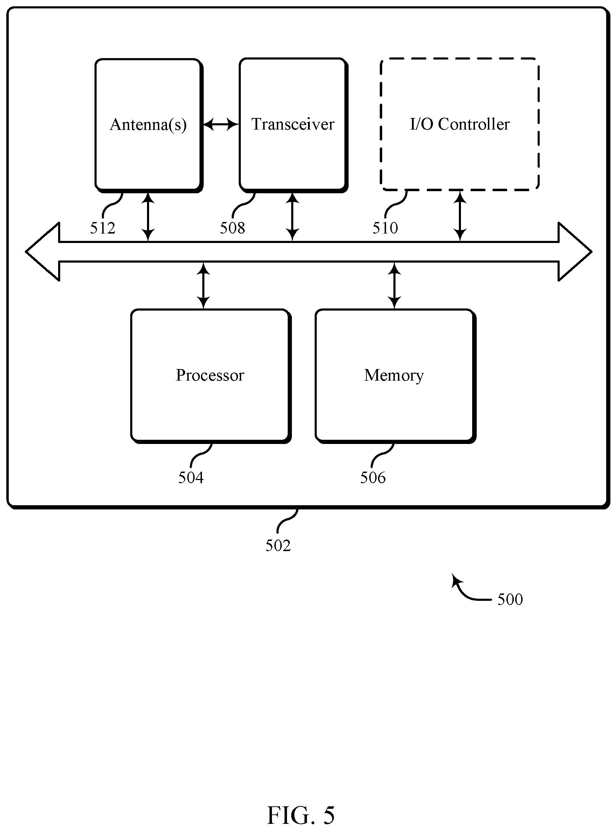

FIG. 5 illustrates an example of a block diagram 500 of a device 502 that supports sidelink positioning congestion control in accordance with aspects of the present disclosure. The device 502 may be an example of a network entity 102 (e.g., a base station) as described herein. The device 502 may support wireless communication with one or more network entities 102, UEs 104, or any combination thereof. The device 502 may include components for bi-directional communications including components for transmitting and receiving communications, such as a processor 504, a memory 506, a transceiver 508, and an I/O controller 510. These components may be in electronic communication or otherwise coupled (e.g., operatively, communicatively, functionally, electronically, electrically) via one or more interfaces (e.g., buses).

The processor 504, the memory 506, the transceiver 508, or various combinations thereof or various components thereof may be examples of means for performing various aspects of the present disclosure as described herein. For example, the processor 504, the memory 506, the transceiver 508, or various combinations or components thereof may support a method for performing one or more of the operations described herein.

In some implementations, the processor 504, the memory 506, the transceiver 508, or various combinations or components thereof may be implemented in hardware (e.g., in communications management circuitry). The hardware may include a processor, a digital signal processor (DSP), an application-specific integrated circuit (ASIC), a field-programmable gate array (FPGA) or other programmable logic device, a discrete gate or transistor logic, discrete hardware components, or any combination thereof configured as or otherwise supporting a means for performing the functions described in the present disclosure. In some implementations, the processor 504 and the memory 506 coupled with the processor 504 may be configured to perform one or more of the functions described herein (e.g., executing, by the processor 504, instructions stored in the memory 506).

For example, the processor 504 may support wireless communication at the device 502 in accordance with examples as disclosed herein. The processor 504 may be configured as or otherwise support a means for configuring a lookup table comprising associations of one or more sidelink positioning transmission parameters, a CBR range of values, and a packet priority; and transmitting a signaling including the lookup table to a UE indicating a control configuration of transmission parameters for a sidelink PRS.

Additionally, the processor 504 may be configured as or otherwise support any one or combination of the lookup table includes the one or more sidelink positioning transmission parameters including upper bounds on one or more of a transmission power, a number of anchor nodes, a number of repetitions, a comb pattern, a quantity of subchannels, a quantity of PRSs, or a channel occupancy ratio. The lookup table associates one or more sidelink positioning techniques according to at least one of a CBR measurement or a priority of sidelink transmission. The lookup table includes a control configuration of the transmission parameters as a sidelink RAT independent positioning technique according to at least one of a CBR measurement or a priority of sidelink transmission. The lookup table includes a control configuration as a subset of the transmission parameters that forms a combined restriction of sidelink data and sidelink PRS. The combined restriction of the sidelink data and the sidelink PRS is based on at least one of a CBR measurement, a priority value of sidelink transmission power, a quantity of subchannels, a quantity of PRSs, a channel occupancy ratio limit, or a quantity of repetitions.

Additionally, or alternatively, the device 502, in accordance with examples as disclosed herein, may include an apparatus for wireless communication, comprising a processor; and a memory coupled with the processor, the processor configured to configure a lookup table comprising associations of one or more sidelink positioning transmission parameters, a CBR range of values, and a packet priority; and transmit a signaling comprising the lookup table to a UE indicating a control configuration of transmission parameters for a sidelink PRS.

Additionally, the wireless communication at the device 502 may include any one or combination of the lookup table includes the one or more sidelink positioning transmission parameters including upper bounds on one or more of a transmission power, a number of anchor nodes, a number of repetitions, a comb pattern, a quantity of subchannels, a quantity of PRSs, or a channel occupancy ratio. The lookup table associates one or more sidelink positioning techniques according to at least one of a CBR measurement or a priority of sidelink transmission. The lookup table includes a control configuration of the transmission parameters as a sidelink RAT independent positioning technique according to at least one of a CBR measurement or a priority of sidelink transmission. The lookup table includes a control configuration as a subset of the transmission parameters that forms a combined restriction of sidelink data and sidelink PRS. The combined restriction of the sidelink data and the sidelink PRS is based on at least one of a CBR measurement, a priority value of sidelink transmission power, a quantity of subchannels, a quantity of PRSs, a channel occupancy ratio limit, or a quantity of repetitions.

The processor 504 may include an intelligent hardware device (e.g., a general-purpose processor, a DSP, a CPU, a microcontroller, an ASIC, an FPGA, a programmable logic device, a discrete gate or transistor logic component, a discrete hardware component, or any combination thereof). In some implementations, the processor 504 may be configured to operate a memory array using a memory controller. In some other implementations, a memory controller may be integrated into the processor 504. The processor 504 may be configured to execute computer-readable instructions stored in a memory (e.g., the memory 506) to cause the device 502 to perform various functions of the present disclosure.

The memory 506 may include random access memory (RAM) and read-only memory (ROM). The memory 506 may store computer-readable, computer-executable code including instructions that, when executed by the processor 504 cause the device 502 to perform various functions described herein. The code may be stored in a non-transitory computer-readable medium such as system memory or another type of memory. In some implementations, the code may not be directly executable by the processor 504 but may cause a computer (e.g., when compiled and executed) to perform functions described herein. In some implementations, the memory 506 may include, among other things, a basic I/O system (BIOS) which may control basic hardware or software operation such as the interaction with peripheral components or devices.

The I/O controller 510 may manage input and output signals for the device 502. The I/O controller 510 may also manage peripherals not integrated into the device M02. In some implementations, the I/O controller 510 may represent a physical connection or port to an external peripheral. In some implementations, the I/O controller 510 may utilize an operating system such as iOS®, ANDROID®, MS-DOS®, MS-WINDOWS®, OS/2®, UNIX®, LINUX®, or another known operating system. In some implementations, the I/O controller 510 may be implemented as part of a processor, such as the processor 504. In some implementations, a user may interact with the device 502 via the I/O controller 510 or via hardware components controlled by the I/O controller 510.

In some implementations, the device 502 may include a single antenna 512. However, in some other implementations, the device 502 may have more than one antenna 512 (i.e., multiple antennas), including multiple antenna panels or antenna arrays, which may be capable of concurrently transmitting or receiving multiple wireless transmissions. The transceiver 508 may communicate bi-directionally, via the one or more antennas 512, wired, or wireless links as described herein. For example, the transceiver 508 may represent a wireless transceiver and may communicate bi-directionally with another wireless transceiver. The transceiver 508 may also include a modem to modulate the packets, to provide the modulated packets to one or more antennas 512 for transmission, and to demodulate packets received from the one or more antennas 512.

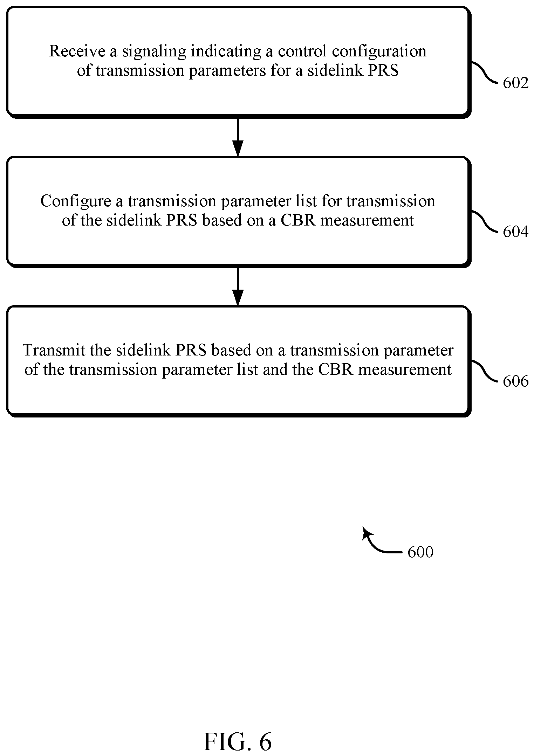

**FIG. 6** illustrates a flowchart of a method 600 that supports sidelink positioning congestion control in accordance with aspects of the present disclosure. The operations of the method 600 may be implemented by a device or its components as described herein. For example, the operations of the method 600 may be performed by a UE 104 as described with reference to FIGs. 1 through 5. In some implementations, the device may execute a set of instructions to control the function elements of the device to perform the described functions. Additionally, or alternatively, the device may perform aspects of the described functions using special-purpose hardware.

At 602, the method may include receiving a signaling indicating a control configuration of transmission parameters for a sidelink PRS. The operations of 602 may be performed in accordance with examples as described herein. In some implementations, aspects of the operations of 602 may be performed by a device as described with reference to FIG. 1.

At 604, the method may include configuring a transmission parameter list for transmission of the sidelink PRS based on a CBR measurement. The operations of 604 may be performed in accordance with examples as described herein. In some implementations, aspects of the operations of 604 may be performed by a device as described with reference to FIG. 1.

At 606, the method may include transmitting the sidelink PRS based at least in part on a transmission parameter of the transmission parameter list and the CBR measurement. The operations of 606 may be performed in accordance with examples as described herein. In some implementations, aspects of the operations of 606 may be performed by a device as described with reference to FIG. 1.

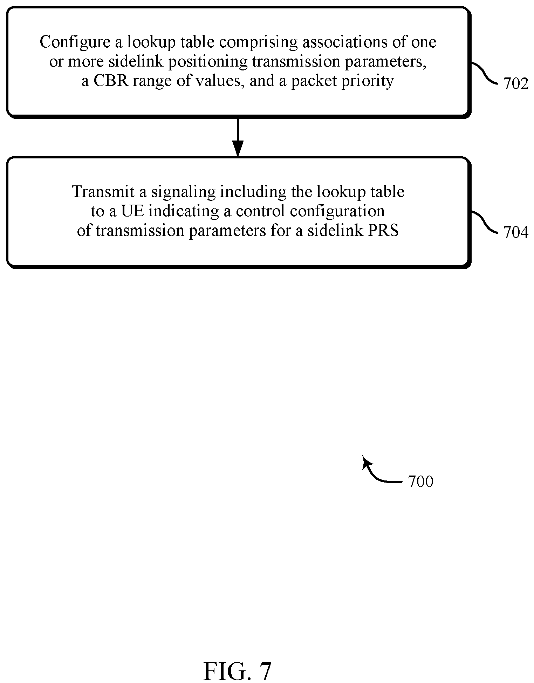

**FIG. 7** illustrates a flowchart of a method 700 that supports sidelink positioning congestion control in accordance with aspects of the present disclosure. The operations of the method 700 may be implemented by a device or its components as described herein. For example, the operations of the method 700 may be performed by a network entity 102 (e.g., base station ) as described with reference to FIGs. 1 through 5. In some implementations, the device may execute a set of instructions to control the function elements of the device to perform the described functions. Additionally, or alternatively, the device may perform aspects of the described functions using special-purpose hardware.

At 702, the method may include configuring a lookup table comprising associations of one or more sidelink positioning transmission parameters, a CBR range of values, and a packet priority. The operations of 702 may be performed in accordance with examples as described herein. In some implementations, aspects of the operations of 702 may be performed by a device as described with reference to FIG. 1.

At 704, the method may include transmitting a signaling including the lookup table to a UE indicating a control configuration of transmission parameters for a sidelink PRS. The operations of 704 may be performed in accordance with examples as described herein. In some implementations, aspects of the operations of 704 may be performed by a device as described with reference to FIG. 1.

It should be noted that the methods described herein describe possible implementations, and that the operations and the steps may be rearranged or otherwise modified and that other implementations are possible. Further, aspects from two or more of the methods may be combined.

The various illustrative blocks and components described in connection with the disclosure herein may be implemented or performed with a general-purpose processor, a DSP, an ASIC, a CPU, an FPGA or other programmable logic device, discrete gate or transistor logic, discrete hardware components, or any combination thereof designed to perform the functions described herein. A general-purpose processor may be a microprocessor, but in the alternative, the processor may be any processor, controller, microcontroller, or state machine. A processor may also be implemented as a combination of computing devices (e.g., a combination of a DSP and a microprocessor, multiple microprocessors, one or more microprocessors in conjunction with a DSP core, or any other such configuration.

The functions described herein may be implemented in hardware, software executed by a processor, firmware, or any combination thereof. If implemented in software executed by a processor, the functions may be stored on or transmitted over as one or more instructions or code on a computer-readable medium. Other examples and implementations are within the scope of the disclosure and appended claims. For example, due to the nature of software, functions described herein may be implemented using software executed by a processor, hardware, firmware, hardwiring, or combinations of any of these. Features implementing functions may also be physically located at various positions, including being distributed such that portions of functions are implemented at different physical locations.

Computer-readable media includes both non-transitory computer storage media and communication media including any medium that facilitates transfer of a computer program from one place to another. A non-transitory storage medium may be any available medium that may be accessed by a general-purpose or special-purpose computer. By way of example, and not limitation, non-transitory computer-readable media may include RAM, ROM, electrically erasable programmable ROM (EEPROM), flash memory, compact disk (CD) ROM or other optical disk storage, magnetic disk storage or other magnetic storage devices, or any other non-transitory medium that may be used to carry or store desired program code means in the form of instructions or data structures and that may be accessed by a general-purpose or special-purpose computer, or a general-purpose or special-purpose processor.

Any connection may be properly termed a computer-readable medium. For example, if the software is transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of computer-readable medium. Disk and disc, as used herein, include CD, laser disc, optical disc, digital versatile disc (DVD), floppy disk and Blu-ray disc where disks usually reproduce data magnetically, while discs reproduce data optically with lasers. Combinations of the above are also included within the scope of computer-readable media.

As used herein, including in the claims, "or" as used in a list of items (e.g., a list of items prefaced by a phrase such as "at least one of" or "one or more of" or "one or both of") indicates an inclusive list such that, for example, a list of at least one of A, B, or C means A or B or C or AB or AC or BC or ABC (i.e., A and B and C). Similarly, a list of one or more of A, B, or C means A or B or C or AB or AC or BC or ABC (i.e., A and B and C). Also, as used herein, the phrase "based on" shall not be construed as a reference to a closed set of conditions. For example, an example step that is described as "based on condition A" may be based on both a condition A and a condition B without departing from the scope of the present disclosure. In other words, as used herein, the phrase "based on" shall be construed in the same manner as the phrase "based at least in part on". Further, as used herein, including in the claims, a "set" may include one or more elements.

The terms "transmitting," "receiving," or "communicating," when referring to a network entity, may refer to any portion of a network entity (e.g., a base station, a CU, a DU, a RU) of a RAN communicating with another device (e.g., directly or via one or more other network entities).

The description set forth herein, in connection with the appended drawings, describes example configurations and does not represent all the examples that may be implemented or that are within the scope of the claims. The term "example" used herein means "serving as an example, instance, or illustration," and not "preferred" or "advantageous over other examples." The detailed description includes specific details for the purpose of providing an understanding of the described techniques. These techniques, however, may be practiced without these specific details. In some instances, known structures and devices are shown in block diagram form to avoid obscuring the concepts of the described example.

The description herein is provided to enable a person having ordinary skill in the art to make or use the disclosure. Various modifications to the disclosure will be apparent to a person having ordinary skill in the art, and the generic principles defined herein may be applied to other variations without departing from the scope of the disclosure.

**Claims**

1. A user equipment, UE, (102, 402) for wireless communication, comprising:

at least one memory (406); and
at least one processor (404) coupled with the at least one memory (406) and configured to cause the UE (102, 402) to:

receive (602) a signaling indicating a control configuration of transmission parameters for a sidelink positioning reference signal, PRS, wherein the control configuration is a subset of the transmission parameters that forms a combined restriction of sidelink data and sidelink PRS, wherein the combined restriction of the sidelink data and the sidelink PRS is based on at least one of a channel busy ratio, CBR, measurement, a priority value of sidelink transmission power, a quantity of subchannels, a quantity of PRSs, a channel occupancy ratio limit, or a quantity of repetitions;
configure (604) a transmission parameter list for transmission of the sidelink PRS based at least in part on the CBR measurement; and
transmit (606) the sidelink PRS based at least in part on a transmission parameter of the transmission parameter list and the CBR measurement.

2. The UE (102, 402) of claim 1, wherein the at least one processor (404) is configured to cause the UE (102, 402) to transmit the sidelink PRS based at least in part on a priority of sidelink transmission.

3. The UE (102, 402) of claim 1, wherein the CBR measurement is based at least in part on a sidelink received signal strength indicator, RSSI.

4. The UE (102, 402) of claim 1, wherein the at least one processor (404) is configured to cause the UE (102, 402) to receive the control configuration of the transmission parameters as a lookup table comprising associations of one or more sidelink positioning transmission parameters, a CBR range of values, and a packet priority.

5. The UE (102, 402) of claim 1, wherein the transmission parameter list includes the transmission parameters including upper bounds on one or more of a transmission power, a number of anchor nodes, a number of repetitions, a comb pattern, a quantity of subchannels, a quantity of positioning reference signals, PRSs, or a channel occupancy ratio.

6. The UE (102, 402) of claim 1, wherein the at least one processor (404) is configured to cause the UE (102, 402) to receive the control configuration of the transmission parameters as at least one of:

one or more sidelink positioning techniques according to at least one of the CBR measurement or a priority of sidelink transmission; or
a sidelink radio access technology, RAT, independent positioning technique according to the at least one of the CBR measurement or the priority of the sidelink transmission.

7. A computer-readable medium comprising program code which, when executed by a computer, cause the computer to:

receive a signaling indicating a control configuration of transmission parameters for a sidelink positioning reference signal, PRS, wherein the control configuration is a subset of the transmission parameters that forms a combined restriction of sidelink data and sidelink PRS, wherein the combined restriction of the sidelink data and the sidelink PRS is based on at least one of a channel busy ratio, CBR, measurement, a priority value of sidelink transmission power, a quantity of subchannels, a quantity of PRSs, a channel occupancy ratio limit, or a quantity of repetitions;
configure a transmission parameter list for transmission of the sidelink PRS based at least in part on the CBR measurement; and
transmit the sidelink PRS based at least in part on a transmission parameter of the transmission parameter list and the CBR measurement.

8. A base station (102, 502) for wireless communication, comprising:

at least one memory (506); and
at least one processor (504) coupled with the at least one memory (506) and configured to cause the base station (102, 502) to:

configure (702) a lookup table comprising associations of one or more sidelink positioning transmission parameters, a channel busy ratio, CBR, range of values, and a packet priority, wherein the lookup table includes a control configuration as a subset of the transmission parameters that forms a combined restriction of sidelink data and sidelink PRS, wherein the combined restriction of the sidelink data and the sidelink PRS is based on at least one of a CBR measurement, a priority value of sidelink transmission power, a quantity of subchannels, a quantity of PRSs, a channel occupancy ratio limit, or a quantity of repetitions; and transmit (704) a signaling comprising the lookup table to a user equipment, UE, (102, 402) indicating the control configuration of transmission parameters for a sidelink positioning reference signal, PRS.

9. The base station (102, 502) of claim 8, wherein the lookup table includes the one or more sidelink positioning transmission parameters including upper bounds on one or more of a transmission power, a number of anchor nodes, a number of repetitions, a comb pattern, a quantity of subchannels, a quantity of positioning reference signals, PRSs, or a channel occupancy ratio.

10. The base station (102, 502) of claim 8, wherein the lookup table associates one or more sidelink positioning techniques according to at least one of a CBR measurement or a priority of sidelink transmission.

11. The base station (102, 502) of claim 8, wherein the lookup table includes the control configuration of the transmission parameters as a sidelink radio access technology, RAT, independent positioning technique according to at least one of a CBR measurement or a priority of sidelink transmission.

12. A method performed by a user equipment, UE, (102, 402), the method comprising:

receiving a signaling indicating a control configuration of transmission parameters for a sidelink positioning reference signal, PRS, wherein the control configuration is a subset of the transmission parameters that forms a combined restriction of sidelink data and sidelink PRS, wherein the combined restriction of the sidelink data and the sidelink PRS is based on at least one of a channel busy ratio CBR measurement, a priority value of sidelink transmission power, a quantity of subchannels, a quantity of PRSs, a channel occupancy ratio limit, or a quantity of repetitions;
configuring a transmission parameter list for transmission of the sidelink PRS based at least in part on the CBR measurement; and
transmitting the sidelink PRS based at least in part on a transmission parameter of the transmission parameter list and the CBR measurement.

**Patentansprüche**

1. Benutzergerät, UE, (102, 402) für drahtlose Kommunikation, umfassend:

mindestens einen Speicher (406); und
mindestens einen Prozessor (404), der mit dem mindestens einen Speicher (406) gekoppelt und dazu konfiguriert ist, zu bewirken, dass das UE (102, 402):

eine Signalisierung empfängt (602), die eine Steuerungskonfiguration von Übertragungsparametern für ein Sidelink-Positionierungsreferenzsignal, PRS, angibt, wobei die Steuerungskonfiguration eine Teilmenge der Übertragungsparameter ist, die eine kombinierte Beschränkung von Sidelink-Daten und Sidelink-PRS bildet, wobei die kombinierte Beschränkung der Sidelink-Daten und des Sidelink-PRS auf mindestens einem von einer Messung der Kanalauslastungsrate, CBR, einem Prioritätswert der Sidelink-Übertragungsleistung, einer Menge von Unterkanälen, einer Menge von PRS, einem Grenzwert für die Kanalbelegungsrate oder einer Menge von Wiederholungen basiert;
eine Übertragungsparameterliste für die Übertragung des Sidelink-PRS zumindest teilweise basierend auf der CBR-Messung konfiguriert (604); und
das Sidelink-PRS zumindest teilweise basierend auf einem Übertragungsparameter der Übertragungsparameterliste und der CBR-Messung überträgt (606).

2. UE (102, 402) nach Anspruch 1, wobei der mindestens eine Prozessor (404) dazu konfiguriert ist, zu bewirken, dass das UE (102, 402) das Sidelink-PRS zumindest teilweise basierend auf einer Priorität der Sidelink-Übertragung überträgt.

3. UE (102, 402) nach Anspruch 1, wobei die CBR-Messung zumindest teilweise auf einem empfangenen Signalstärkenindikator, RSSI, des Sidelinks basiert.

4. UE (102, 402) nach Anspruch 1, wobei der mindestens eine Prozessor (404) dazu konfiguriert ist, zu bewirken, dass das UE (102, 402) die Steuerungskonfiguration der Übertragungsparameter als eine Nachschlagetabelle empfängt, die Zuordnungen von einem oder mehreren Sidelink-Positionierungsübertragungsparametern, einen CBR-Wertebereich und eine Paketpriorität umfasst.

5. UE (102, 402) nach Anspruch 1, wobei die Übertragungsparameterliste die Übertragungsparameter enthält, einschließlich Obergrenzen für eines oder mehrere von einer Übertragungsleistung, einer Anzahl von Ankerknoten, einer Anzahl von Wiederholungen, einem Kammmuster, einer Menge von Unterkanälen, einer Menge von Positionsreferenzsignalen, PRS, oder einer Kanalbelegungsrate.

6. UE (102, 402) nach Anspruch 1, wobei der mindestens eine Prozessor (404) dazu konfiguriert ist, zu bewirken, dass das UE (102, 402) die Steuerungskonfiguration der Übertragungsparameter empfängt als mindestens eines von:

   einer oder mehreren Sidelink-Positionierungstechniken gemäß mindestens einem von der CBR-Messung oder einer Priorität der Sidelink-Übertragung; oder
   einer von der Sidelink-Funkzugangstechnologie, RAT, unabhängigen Positionierungstechnik gemäß dem mindestens einen von der CBR-Messung oder der Priorität der Sidelink-Übertragung.

7. Computerlesbares Medium, das Programmcode umfasst, der bewirkt, wenn er von einem Computer ausgeführt wird, dass der Computer:

   eine Signalisierung empfängt, die eine Steuerungskonfiguration von Übertragungsparametern für ein Sidelink-Positionierungsreferenzsignal, PRS, angibt, wobei die Steuerungskonfiguration eine Teilmenge der Übertragungsparameter ist, die eine kombinierte Beschränkung von Sidelink-Daten und Sidelink-PRS bildet, wobei die kombinierte Beschränkung der Sidelink-Daten und des Sidelink-PRS auf mindestens einem von einer Messung der Kanalauslastungsrate,CBR, einem Prioritätswert der Sidelink-Übertragungsleistung, einer Menge von Unterkanälen, einer Menge von PRS, einem Grenzwert für die Kanalbelegungsrate oder einer Menge von Wiederholungen basiert;
   eine Übertragungsparameterliste für die Übertragung des Sidelink-PRS zumindest teilweise basierend auf der CBR-Messung konfiguriert; und
   das Sidelink-PRS zumindest teilweise basierend auf einem Übertragungsparameter der Übertragungsparameterliste und der CBR-Messung überträgt.

8. Basisstation (102, 502) für drahtlose Kommunikation, umfassend:

   mindestens einen Speicher (506); und
   mindestens einen Prozessor (504), der mit dem mindestens einen Speicher (506) gekoppelt und dazu konfiguriert ist, zu bewirken, dass die Basisstation (102, 502):

      eine Nachschlagetabelle konfiguriert (702), die Zuordnungen von einem oder mehreren Sidelink-Positionierungsübertragungsparametern, eine Kanalauslastungsrate, CBR, einen Wertebereich und eine Paketpriorität umfasst, wobei die Nachschlagetabelle eine Steuerungskonfiguration als eine Teilmenge der Übertragungsparameter enthält, die eine kombinierte Beschränkung von Sidelink-Daten und dem Sidelink-PRS bildet, wobei die kombinierte Beschränkung der Sidelink-Daten und des Sidelink-PRS auf mindestens einem von einer einer CBR-Messung, einem Prioritätswert der Sidelink-Übertragungsleistung, einer Menge von Unterkanälen, einer Menge von PRS, einem Grenzwert für die Kanalbelegungsrate oder einer Menge von Wiederholungen basiert; und
      eine Signalisierung, die die Nachschlagetabelle umfasst, an ein Benutzergerät (UE) (102, 402) überträgt (704), wodurch die Steuerungskonfiguration der Übertragungsparameter für ein Sidelink-Positionierungsreferenzsignal, PRS, angegeben wird.

9. Basisstation (102, 502) nach Anspruch 8, wobei die Nachschlagetabelle den einen oder die mehreren Sidelink-Positionierungsübertragungsparameter enthält, einschließlich Obergrenzen für eine oder mehrere von einer Übertragungsleistung, einer Anzahl von Ankerknoten, einer Anzahl von Wiederholungen, einem Kammmuster, einer Menge von Unterkanälen, einer Menge von Positionierungsreferenzsignalen, PRS, oder einer Kanalbelegungsrate.

**10.** Basisstation (102, 502) nach Anspruch 8, wobei die Nachschlagetabelle eine oder mehrere Sidelink-Positionierungstechniken gemäß mindestens einem von einer CBR-Messung oder einer Priorität der Sidelink-Übertragung zuordnet.

**11.** Basisstation (102, 502) nach Anspruch 8, wobei die Nachschlagetabelle die Steuerungskonfiguration der Übertragungsparameter als eine von der Sidelink-Funkzugangstechnologie, RAT, unabhängige Positionierungstechnik gemäß mindestens einem von einer CBR-Messung oder einer Priorität der Sidelink-Übertragung enthält.

**12.** Verfahren, das von einem Benutzergerät, UE, (102, 402) durchgeführt wird, wobei das Verfahren umfasst:

Empfangen einer Signalisierung, die eine Steuerungskonfiguration von Übertragungsparametern für ein Sidelink-Positionierungsreferenzsignal, PRS, angibt, wobei die Steuerungskonfiguration eine Teilmenge der Übertragungsparameter ist, die eine kombinierte Beschränkung von Sidelink-Daten und dem Sidelink-PRS bildet, wobei die kombinierte Beschränkung der Sidelink-Daten und des Sidelink-PRS auf mindestens einem von einer Messung einer Kanalauslastungsrate CBR, einem Prioritätswert der Sidelink-Übertragungsleistung, einer Menge von Unterkanälen, einer Menge von PRS, einem Grenzwert für die Kanalbelegungsrate oder einer Menge von Wiederholungen basiert;
Konfigurieren einer Übertragungsparameterliste für die Übertragung des Sidelink-PRS zumindest teilweise basierend auf der CBR-Messung; und
Übertragen des Sidelink-PRS zumindest teilweise basierend auf einem Übertragungsparameter der Übertragungsparameterliste und der CBR-Messung.

## Revendications

**1.** Équipement utilisateur, UE, (102, 402) destiné à une communication sans fil, comprenant :

au moins une mémoire (406) ; et
au moins un processeur (404) couplé à l'au moins une mémoire (406) et configuré pour amener l'UE (102, 402) à :

recevoir (602) une signalisation indiquant une configuration de commande de paramètres de transmission pour un signal de référence de positionnement de liaison latérale, PRS, la configuration de commande étant un sous-ensemble des paramètres de transmission qui forme une restriction combinée de données de liaison latérale et de PRS de liaison latérale, la restriction combinée des données de liaison latérale et du PRS de liaison latérale étant basée sur au moins un élément parmi une mesure de rapport d'encombrement de canal, CBR, une valeur de priorité de puissance de transmission de liaison latérale, une quantité de sous-canaux, une quantité de PRS, une limite de rapport d'occupation de canal ou une quantité de répétitions ;
configurer (604) une liste de paramètres de transmission pour la transmission du PRS de liaison latérale sur la base, au moins en partie, de la mesure de CBR ; et
transmettre (606) le PRS de liaison latérale sur la base, au moins en partie, d'un paramètre de transmission de la liste de paramètres de transmission et de la mesure de CBR.

**2.** UE (102, 402) selon la revendication 1, dans lequel l'au moins un processeur (404) est configuré pour amener l'UE (102, 402) à transmettre le PRS de liaison latérale sur la base, au moins en partie, d'une priorité de transmission de liaison latérale.

**3.** UE (102, 402) selon la revendication 1, dans lequel la mesure de CBR est basée, au moins en partie, sur un indicateur d'intensité de signal reçu de liaison latérale, RSSI.

**4.** UE (102, 402) selon la revendication 1, dans lequel l'au moins un processeur (404) est configuré pour amener l'UE (102, 402) à recevoir la configuration de commande des paramètres de transmission sous forme d'une table de correspondance comprenant des associations d'un ou plusieurs paramètres de transmission de positionnement de liaison latérale, d'une plage de valeurs de CBR et d'une priorité de paquet.

**5.** UE (102, 402) selon la revendication 1, dans lequel la liste de paramètres de transmission comprend les paramètres de transmission incluant des limites supérieures sur un ou plusieurs éléments parmi une puissance de transmission, un nombre de nœuds d'ancrage, un nombre de répétitions, un motif en peigne, une quantité de sous-canaux, une quantité de signaux de référence de positionnement, PRS, ou un rapport d'occupation de canal.

**6.** UE (102, 402) selon la revendication 1, dans lequel l'au moins un processeur (404) est configuré pour amener l'UE (102, 402) à recevoir la configuration de commande des paramètres de transmission sous forme d'au moins une parmi :

une ou plusieurs techniques de positionnement de liaison latérale selon au moins un élément parmi la mesure de CBR ou une priorité de transmission de liaison latérale ; ou
une technique de positionnement indépendante de technologie d'accès radio de liaison latérale, RAT, selon l'au moins un élément parmi la mesure de CBR ou la priorité de la transmission de liaison latérale.

**7.** Support lisible par ordinateur comprenant un code de programme qui, lorsqu'il est exécuté par un ordinateur, amène l'ordinateur à :

recevoir une signalisation indiquant une configuration de commande de paramètres de transmission pour un signal de référence de positionnement de liaison latérale, PRS, la configuration de commande étant un sous-ensemble des paramètres de transmission qui forme une restriction combinée de données de liaison latérale et de PRS de liaison latérale, la restriction combinée des données de liaison latérale et du PRS de liaison latérale étant basée sur au moins un élément parmi une mesure de rapport d'encombrement de canal, CBR, une valeur de priorité de puissance de transmission de liaison latérale, une quantité de sous-canaux, une quantité de PRS, une limite de rapport d'occupation de canal ou une quantité de répétitions ;
configurer une liste de paramètres de transmission pour la transmission du PRS de liaison latérale sur la base, au moins en partie, de la mesure de CBR ; et
transmettre le PRS de liaison latérale sur la base, au moins en partie, d'un paramètre de transmission de la liste de paramètres de transmission et de la mesure de CBR.

**8.** Station de base (102, 502) destinée à une communication sans fil, comprenant :

au moins une mémoire (506) ; et
au moins un processeur (504) couplé à l'au moins une mémoire (506) et configuré pour amener la station de base (102, 502) à :

configurer (702) une table de correspondance comprenant des associations d'un ou plusieurs paramètres de transmission de positionnement de liaison latérale, d'une plage de valeurs de rapport d'encombrement de canal, CBR, et d'une priorité de paquet, la table de correspondance comprenant une configuration de commande sous forme d'un sous-ensemble des paramètres de transmission qui forme une restriction combinée de données de liaison latérale et de PRS de liaison latérale, la restriction combinée des données de liaison latérale et du PRS de liaison latérale étant basée sur au moins un élément parmi une mesure de CBR, une valeur de priorité de puissance de transmission de liaison latérale, une quantité de sous-canaux, une quantité de PRS, une limite de rapport d'occupation de canal ou une quantité de répétitions ; et
transmettre (704) une signalisation comprenant la table de correspondance à un équipement utilisateur, UE, (102, 402), indiquant la configuration de commande des paramètres de transmission pour un signal de référence de positionnement de liaison latérale, PRS.

**9.** Station de base (102, 502) selon la revendication 8, dans laquelle la table de correspondance comprend les un ou plusieurs paramètres de transmission de positionnement de liaison latérale incluant des limites supérieures sur un ou plusieurs éléments parmi une puissance de transmission, un nombre de nœuds d'ancrage, un nombre de répétitions, un motif en peigne, une quantité de sous-canaux, une quantité de signaux de référence de positionnement, PRS, ou un rapport d'occupation de canal.

**10.** Station de base (102, 502) selon la revendication 8, dans laquelle la table de correspondance associe une ou plusieurs techniques de positionnement de liaison latérale selon au moins un élément parmi une mesure de CBR ou une priorité de transmission de liaison latérale.

**11.** Station de base (102, 502) selon la revendication 8, dans laquelle la table de correspondance comprend la configuration de commande des paramètres de transmission sous forme d'une technique de positionnement indépendante de technologie d'accès radio de liaison latérale, RAT, selon au moins un élément parmi une mesure de CBR ou une priorité de transmission de liaison latérale.

**12.** Procédé mis en œuvre par un équipement utilisateur, UE, (102, 402), le procédé comprenant :

la réception d'une signalisation indiquant une configuration de commande de paramètres de transmission pour un signal de référence de positionnement de liaison latérale, PRS, la configuration de commande étant un sous-ensemble des paramètres de transmission qui forme une restriction combinée de données de liaison latérale et de PRS de liaison latérale, la restriction combinée des données de liaison latérale et du PRS de liaison latérale étant basée sur au moins un élément parmi une mesure de rapport d'encombrement de canal, CBR, une valeur de priorité de puissance de transmission de liaison latérale, une quantité de sous-canaux, une quantité de PRS, une limite de rapport d'occupation de canal ou une quantité de répétitions ;

la configuration d'une liste de paramètres de transmission pour la transmission du PRS de liaison latérale sur la base, au moins en partie, de la mesure de CBR ; et

la transmission du PRS de liaison latérale sur la base, au moins en partie, d'un paramètre de transmission de la liste de paramètres de transmission et de la mesure de CBR.

FIG. 1

202

```
-- ASN1START
-- TAG-SL-CBR-PRIORITYTXCONFIGLIST-START

SL-CBR-PriorityTxConfigList-r16 ::= SEQUENCE (SIZE (1..8)) OF SL-PriorityTxConfigIndex-r16

SL-CBR-PriorityTxConfigList-v1650 ::= SEQUENCE (SIZE (1..8)) OF SL-PriorityTxConfigIndex-v1650

SL-PriorityTxConfigIndex-r16 ::=     SEQUENCE {
    sl-PriorityThreshold-r16                INTEGER (1..8)
OPTIONAL,    -- Need M
    sl-DefaultTxConfigIndex-r16             INTEGER (0..maxCBR-Level-1-r16)
OPTIONAL,    -- Need M
    sl-CBR-ConfigIndex-r16                  INTEGER (0..maxCBR-Config-1-r16)
OPTIONAL,    -- Need M
    sl-Tx-ConfigIndexList-r16               SEQUENCE (SIZE (1.. maxCBR-Level-r16)) OF SL-TxConfigIndex-
r16    OPTIONAL     -- Need M
}

SL-PriorityTxConfigIndex-v1650 ::=  SEQUENCE {
    sl-MCS-RangeList-r16                     SEQUENCE (SIZE (1..maxCBR-Level-r16)) OF SL-MinMaxMCS-List-
r16    OPTIONAL     -- Need M
}

SL-TxConfigIndex-r16 ::=               INTEGER (0..maxTxConfig-1-r16)

-- TAG-SL-CBR-PRIORITYTXCONFIGLIST-STOP
-- ASN1STOP
```

204

| SL-CBR-PriorityTxConfigList field descriptions |
|---|
| **sl-CBR-ConfigIndex** |
| Indicates the CBR ranges to be used by an index to the entry of the CBR range configuration in *sl-CBR-RangeConfigList*. |
| **sl-DefaultTxConfigIndex** |
| Indicates the PSSCH transmission parameters to be used by the UEs which do not have available CBR measurement results, by means of an index to the corresponding entry in *tx-ConfigIndexList*. Value 0 indicates the first entry in *tx-ConfigIndexList*. The field is ignored if the UE has available CBR measurement results. |
| **sl-MCS-RangeList** |
| Indicates the minimum MCS value and maximum MCS value for the associated MCS table(s). UE shall ignore the minimum MCS value and maximum MCS value used for table of 64QAM indicated in *SL-CBR-PriorityTxConfigList-r16* if *SL-CBR-PriorityTxConfigList-v1650* is present. |
| **sl-PriorityThreshold** |
| Indicates the upper bound of priority range which is associated with the configurations in *sl-CBR-ConfigIndex* and in *sl-Tx-ConfigIndexList*. The upper bounds of the priority ranges are configured in ascending order for consecutive entries of *SL-PriorityTxConfigIndex* in *SL-CBR-PriorityTxConfigList*. For the first entry of *SL-PriorityTxConfigIndex*, the lower bound of the priority range is 1. |
| **SL-CBR-PriorityTxConfigList-v1650** |
| If included, it includes the same number of entries, and listed in the same order, as in *SL-CBR-PriorityTxConfigList-r16*. |

200

## FIG. 2

302

```
-- ASN1START
-- TAG-SL-CBR-COMMONTXCONFIGLIST-START

SL-CBR-CommonTxConfigList-r16 ::=      SEQUENCE {
     sl-CBR-RangeConfigList-r16              SEQUENCE (SIZE (1..maxCBR-Config-r16)) OF SL-CBR-
LevelsConfig-r16     OPTIONAL,    -- Need M
     sl-CBR-PSSCH-TxConfigList-r16          SEQUENCE (SIZE (1.. maxTxConfig-r16)) OF SL-CBR-PSSCH-
TxConfig-r16    OPTIONAL    -- Need M
}

SL-CBR-LevelsConfig-r16 ::=            SEQUENCE (SIZE (1..maxCBR-Level-r16)) OF SL-CBR-r16

SL-CBR-PSSCH-TxConfig-r16 ::=          SEQUENCE {
     sl-CR-Limit-r16                       INTEGER(0..10000)
OPTIONAL,    -- Need M
     sl-TxParameters-r16                   SL-PSSCH-TxParameters-r16
OPTIONAL    -- Need M
}

SL-CBR-r16 ::=                         INTEGER (0..100)

-- TAG-SL-CBR-COMMONTXCONFIGLIST-STOP
-- ASN1STOP
```

304

| SL-CBR-CommonTxConfigList field descriptions |
|---|
| **sl-CBR-RangeConfigList** |
| Indicates the list of CBR ranges. Each entry of the list indicates in *SL-CBR-LevelsConfig* the upper bound of the CBR range for the respective entry. The upper bounds of the CBR ranges are configured in ascending order for consecutive entries of *sl-CBR-RangeConfigList*. For the first entry of *sl-CBR-RangeConfigList* the lower bound of the CBR range is 0. Value 0 corresponds to 0, value 1 to 0.01, value 2 to 0.02, and so on. |
| **sl-CR-Limit** |
| Indicates the maximum limit on the occupancy ratio. Value 0 corresponds to 0, value 1 to 0.0001, value 2 to 0.0002, and so on (i.e. in steps of 0.0001) until value 10000, which corresponds to 1. |
| **sl-CBR-PSSCH-TxConfigList** |
| Indicates the list of available PSSCH transmission parameters (such as MCS, sub-channel number, retransmission number and CR limit) configurations. |
| **sl-TxParameters** |
| Indicates PSSCH transmission parameters. |

300

FIG. 3

FIG. 4

FIG. 5

Receive a signaling indicating a control configuration of transmission parameters for a sidelink PRS ⟋ 602

Configure a transmission parameter list for transmission of the sidelink PRS based on a CBR measurement ⟋ 604

Transmit the sidelink PRS based on a transmission parameter of the transmission parameter list and the CBR measurement ⟋ 606

↖ 600

FIG. 6

Configure a lookup table comprising associations of one
or more sidelink positioning transmission parameters,
a CBR range of values, and a packet priority

702

Transmit a signaling including the lookup table
to a UE indicating a control configuration
of transmission parameters for a sidelink PRS

704

700

FIG. 7

**EP 4 470 147 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 63396070
- WO 2022059887 A1
- WO 2022155262 A1